# FASCICULE DE BREVET EUROPEEN

(11) **EP 2 097 211 B1**
(45) Date de publication et mention de la délivrance du brevet: **28.07.2010**
(21) Numéro de dépôt: 07858525.4
(22) Date de dépôt: 08.10.2007
(51) Int. Cl.: B23Q 1/00, B23Q 1/01

(54) **MACHINE-OUTIL**
MASCHINENWERKZEUG
MACHINE TOOL

(30) Priorité: 20.10.2006 FR 0654424
(43) Date de publication de la demande: 09.09.2009
(73) Titulaire: Comau France, 78191 Trappes Cédex (FR)
(72) Inventeur: CAHUZAC, Daniel, 81600 Fenols (FR); BETEILLE, Pierre, 81570 Semalens (FR)
(74) Mandataire: Richebourg, Michel François
(86) Numéro de dépôt international: PCT/FR2007/052094
(87) Numéro de publication internationale: WO 2008/050024

(56) Documents cités:
- EP-A- 1 402 991
- EP-A1- 0 347 366
- JP-A- 10 043 975
- US-A- 2 739 773
- US-A- 5 933 933

## Description

### DOMAINE D'APPLICATION DE L'INVENTION

La présente invention a trait au domaine des machines-outils et notamment à l'architecture de ces dernières.

### DESCRIPTION DE L'ART ANTÉRIEUR

La demanderesse a constaté plusieurs inconvénients dans les architectures actuelles de machines-outils, parmi ceux-ci :
- les machines-outils mettant en oeuvre une poupée porte électrobroche n'offrent pas beaucoup de possibilités d'accès à l'arrière de l'électrobroche pour les opérations d'installation, de manutention et d'entretien,
- sur une grande structure, le positionnement de l'axe de l'électrobroche par rapport au bâti porte-pièce requiert la réalisation d'usinages et des opérations de réglage complexes et coûteux,
- lorsque la structure ou une partie de la structure est mise en mouvement par des paires de moteurs linéaires, l'effet "gantry" portique doit être géré,
- les rideaux de séparation entre le poste d'usinage et le poste d'entraînement de la machine-outil présentent une architecture complexe pour suivre les mouvements du module porte-outil selon trois axes, ces rideaux requérant un volume libre dans l'architecture de la machine-outil,
   EP-1402 991-A décrit une machine-outil selon le préambule de la revendication 1.

### DESCRIPTION DE L'INVENTION

Partant de cet état de fait, la demanderesse a mené des recherches qui ont abouti à la conception d'une nouvelle architecture de machine-outil permettant de résoudre notamment les inconvénients constatés.

La machine-outil de l'invention est définie à la revendication 1.

Une caractéristique particulièrement avantageuse de la machine-outil de l'invention concerne, le positionnement des plans de déplacement du portique et de la poupée en regard du reste du bâti de la machine-outil notamment en regard du banc supportant le sous-ensemble mobile porte-pièce qui met en mouvement la pièce selon un axe parallèle à l'axe de rotation de l'outil. En effet, selon un choix technologique particulièrement judicieux, la console assurant le support du portique et de la poupée porte électrobroche est équipée d'un point de pivotement par rapport au reste du bâti définissant un axe de rotation sensiblement vertical, ladite console comprenant également un moyen de mise en mouvement susceptible de positionner angulairement ladite console et l'ensemble qu'elle supporte par rapport à son axe de rotation vertical de façon à régler le positionnement angulaire de l'ensemble supporté par rapport au sous-ensemble porte-pièce.

Cette caractéristique rend séparables les différents sous-ensembles fonctionnels constituant la structure de la machine. En outre, elle évite la réalisation d'un usinage très précis pour les surfaces en contact entre la console et le bâti. Selon une caractéristique particulièrement avantageuse, ledit sous-ensemble assurant le support de la pièce à usiner se déplace le long de rails longitudinaux solidaires d'un banc à une extrémité duquel est positionnée ladite console. En outre, l'extrémité du banc supportant ladite console est préformée d'une surface plane horizontale coopérant avec une surface plane correspondante ménagée sur la console de façon à autoriser un déplacement plan sur plan entre la console et ledit banc lors de sa rotation autour de son axe de pivotement à des fins de réglage angulaire.

La demanderesse a également mené des recherches pour assurer dans les meilleures conditions la séparation entre le poste d'usinage et le poste d'entraînement de la machine-outil. Selon une caractéristique particulièrement avantageuse de l'invention, ledit tablier de protection assurant la séparation entre le poste d'usinage et le poste d'entraînement en suivant les mouvements du module porte-outil est constitué par :
- un rideau mobile traversé par le module porte-outil et se déplaçant selon un premier axe à l'intérieur d'un encadrement guidant le déplacement dudit rideau et pourvu de part et d'autre du chemin de déplacement de plaques fixes par rapport audit encadrement, l'encadrement, le rideau et les plaques formant un premier panneau mobile selon un deuxième axe perpendiculaire au premier,
- un deuxième panneau mobile selon ledit deuxième axe et qui, comprend ménagée sur sa partie centrale une première fenêtre, fermée par ledit premier panneau mobile,
- un cadre fixe définissant une deuxième fenêtre fermée par ledit deuxième panneau mobile et par ledit premier panneau mobile y associé,
- des pantographes dont une première extrémité est solidaire du cadre fixe et une deuxième extrémité est solidaire dudit encadrement, les points d'articulations intermédiaires étant liés audit deuxième panneau mobile.

Cette structure de rideau de séparation est particulièrement adaptée en ce que les éléments mobiles qui le constituent, ne viennent pas en conflit avec la partie du bâti située au-dessous et devant l'électrobroche. En effet, la présence d'un module porte-pièce face au module de mise en mouvement, module se déplaçant sur un bâti soutenant le module de mise en mouvement constitue un obstacle à des éléments mobiles verticaux transversaux susceptibles de suivre les mouvements de la poupée. Cet inconvénient est résolu par la structure du rideau.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'une machine-outil conforme à l'invention.

### BRÈVE DESCRIPTION DES DESSINS

La figure 1 est un dessin schématique d'une vue de dessus d'un mode de réalisation d'une machine-outil conforme à l'invention dont on a retiré l'enceinte de protection,
La figure 2 est un dessin schématique d'une vue de côté de l'architecture du poste d'entraînement de la machine-outil illustrée en figure 1,
La figure 3 est un dessin schématique d'une vue en perspective d'un mode de réalisation du bâti accueillant le poste d'entraînement,
La figure 4 est un dessin schématique d'une vue de dessus illustrant la liaison entre ledit bâti et le poste d'entraînement,
La figure 5 est un dessin schématique d'une vue en perpective arrière d'un mode de réalisation conforme à l'invention du tablier de séparation entre le poste d'entraînement et le poste d'usinage,
la figure 6 est un dessin schématique d'une vue en perspective avant du tablier de la figure 5,
Les figures 7a, 7b, 7c et 7d illustrent plusieurs éléments constitutifs dudit tablier.

### DESCRIPTION DES MODES DE RÉALISATION PRÉFÉRÉS

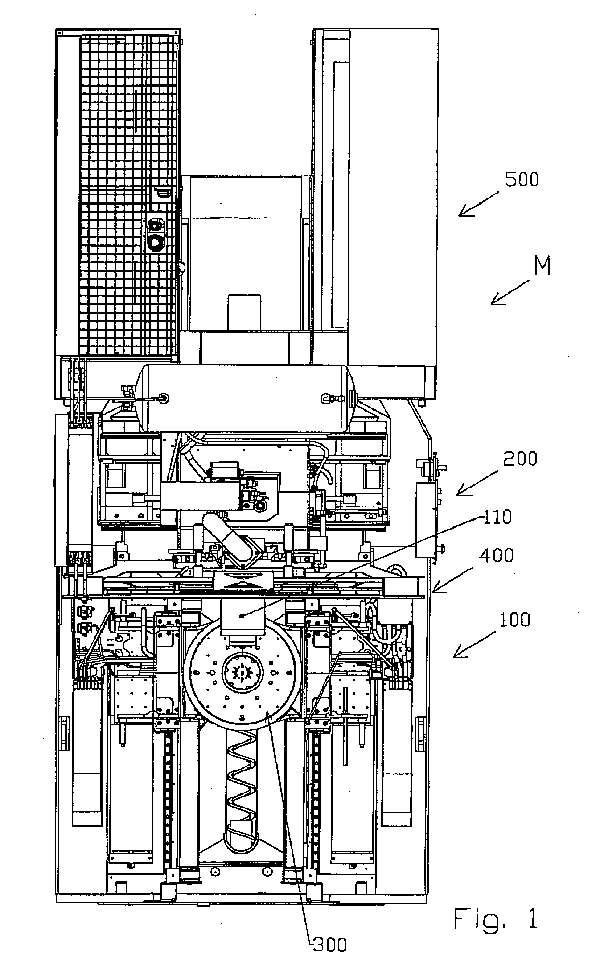

Tel qu'illustré sur le dessin de la figure 1, la machine-outil référencée M dans son ensemble est du type de celle comprenant un poste d'usinage 100 et un poste d'entraînement 200 d'au moins un module porte-outil 110 assurant les opérations d'usinage à l'intérieur du poste d'usinage 100.

Ledit poste d'usinage 100 comprend un sous-ensemble 300 supportant ou moins une pièce à usiner (non illustrée).

En outre, un tablier de protection 400 traversé par le module porte-outil 110 sépare le poste d'usinage 100 du poste d'entraînement 200. Selon le mode de réalisation illustré, la machine-outil M comporte en outre, à l'arrière du poste d'entraînement, un poste de logistique et de commande 500 comprenant les commandes numériques, les sous-ensembles d'alimentation, de refroidissement, etc...Ce poste de logistique et de commande 500 ne requiert pas des critères de positionnement très précis avec le reste de la machine-outil et forme un module indépendant des autres.

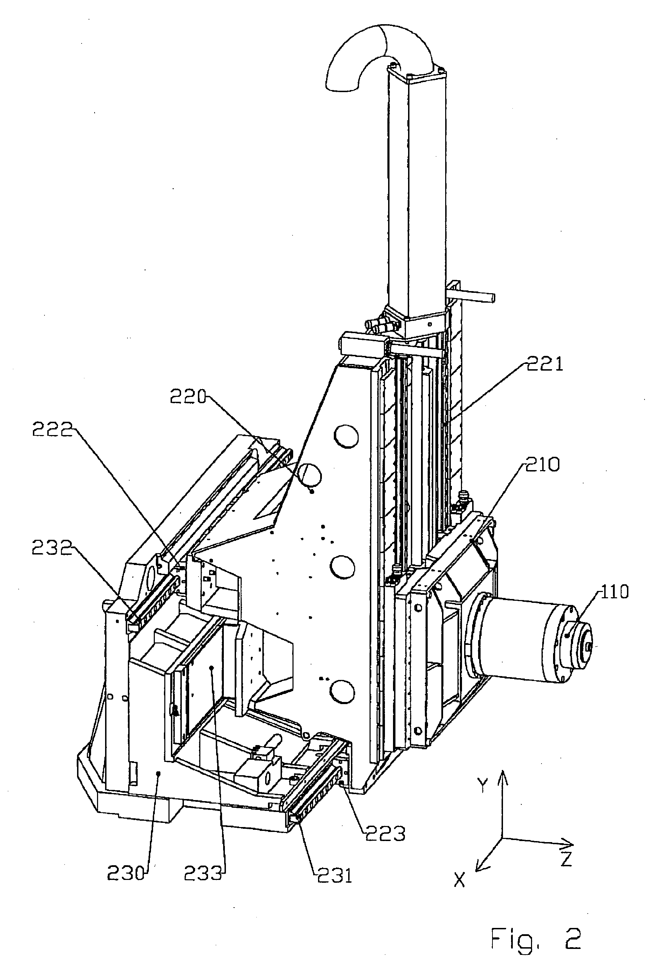

Comme illustré plus en détail sur le dessin de la figure 2, le poste d'entraînement 200 comprend une électrobroche constituant le module porte-outil 110 et portée par une poupée 210 se déplaçant selon un premier axe Y dans un plan vertical défini par les axes X et Y de déplacement sur un portique 220 se déplaçant selon un deuxième axe X perpendiculaire au premier dans un autre plan vertical de déplacement parallèle au premier. Ledit portique 220 porte une paire de rails guidant en translation la poupée 210 selon un axe vertical et coopère avec des rails transversaux 231 et 232 de guidage en translation horizontale liés à une console 230 solidaire du bâti de la machine-outil M.

Comme illustrée et conformément à l'invention, la liaison entre le portique 220 et lesdits rails transversaux 231 et 232 se situe au niveau de la partie basse dudit portique 220, la partie haute étant libre de tout élément de guidage ou d'entraînement de sorte que lorsque le mouvement de la poupée 210 positionne l'électrobroche 110 en partie haute de portique 220, l'arrière de ladite électrobroche 110 devient accessible à partir du poste d'entraînement 200 pour des opérations d'installation, de manutention et d'entretien. Pour ce faire, la partie haute du portique est ajourée d'au moins une fenêtre sise entre les rails verticaux et autorisant l'accès à l'arrière de la poupée 210 à partir de l'arrière du portique 220. Selon le mode de réalisation illustré, le portique 220 comprend, sur la partie avant, une surface d'accueil 221 des moyens de guidage et de mise en mouvement de ladite poupée 210 et, sur sa partie arrière, des patins 222 et 223 venant glisser sur les rails 231 et 232. Comme illustrés, ladite console 230 ainsi que le dit portique 220 sont préformés de façon à ce que les deux rails de guidage 231 et 232 soient décalés aussi bien verticalement qu'horizontalement.

Selon une caractéristique particulièrement avantageuse de l'invention, l'entraînement en translation selon un mouvement horizontal transversal c'est à dire ici selon l'axe X est réalisé par un seul moteur linéaire disposé verticalement et dans un plan vertical de déplacement intercalé entre les deux plans verticaux de déplacement définis par les rails transversaux 231 et 232. Selon le mode de réalisation illustré, ladite console 230 présente trois plans verticaux décalés accueillant respectivement un premier rail 232, le bloc secondaire du moteur linéaire 233 et le deuxième rail 231. La réalisation de surfaces parallèles pour accueillir les rails et le bloc secondaire du moteur linéaire simplifie la réalisation de la console 230.

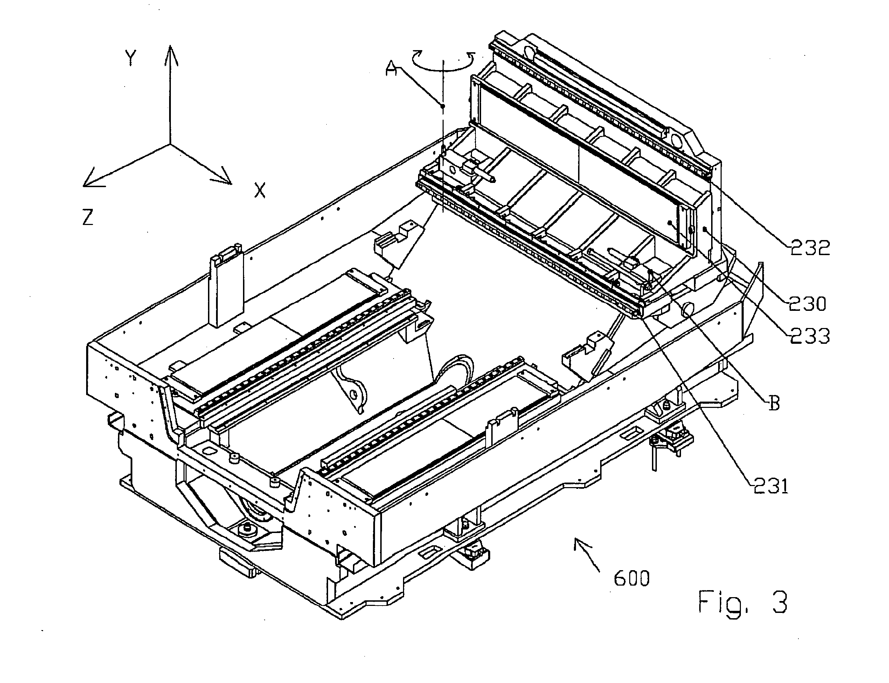

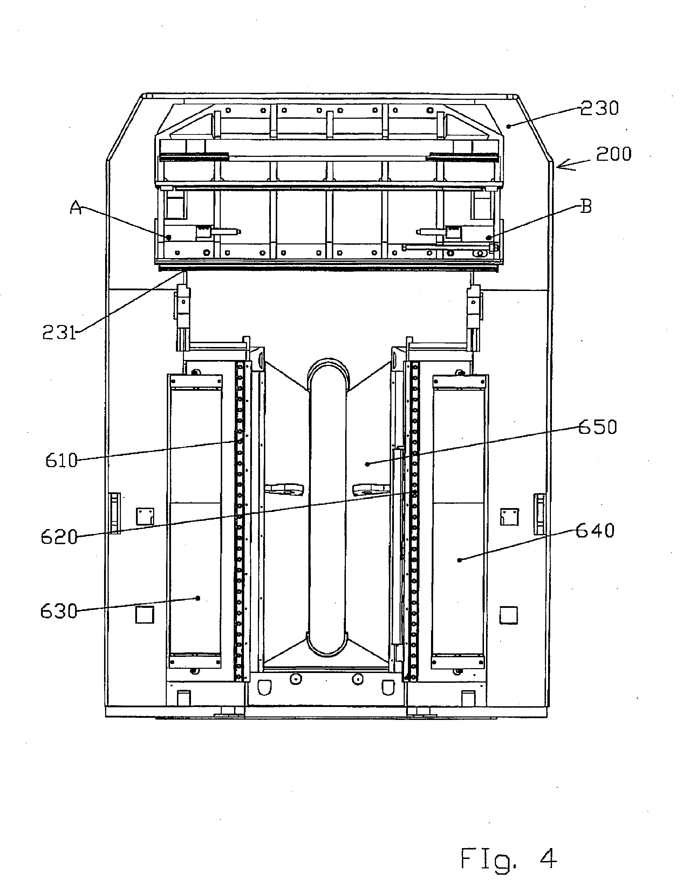

Conformément à l'invention, la machine-outil M de l'invention adopte une structure en plusieurs modules simplifiant grandement la réalisation des surfaces de référence. Selon le mode de réalisation proposé par les figures jointes, le poste d'entraînement de la poupée 210 qui adopte une disposition générale verticale et qui forme un premier module, est associé au banc 600 accueillant le sous-ensemble porte pièce mobile 300 qui forme un autre module par des moyens de mise en position et de maintien en position. Comme illustré par les dessins des figures 3 et 4, la console 230 assurant le support du portique 220 et de la poupée 210 présente un axe de pivotement sensiblement vertical et référencé A par rapport au reste du bâti constitué par ledit banc 600 à une de ses extrémités, un autre point B de ladite console 230 comprenant un moyen de mise en mouvement susceptible de positionner angulairement ladite console 230 et en conséquence l'ensemble du poste d'entraînement 200 par rapport à son axe de rotation A c'est à dire selon l'axe Y. Cette possibilité de positionnement angulaire évite l'obligation d'usinages complexes requérant le respect de contraintes de perpendicularité entre les axes surfaces d'appui et de guidage selon les axes X, Y et Z.

Selon une caractéristique particulièrement avantageuse, le moyen de mise en mouvement situé au point B est constitué par un système amovible de came (non illustré) présentant une surface excentrique de quelques dixièmes de millièmes et qui, par rotation au niveau du point B, assure le déplacement relatif d'un module par rapport à l'autre avec précision et raideur. Une fois la bonne position atteinte, le système à came est retiré et la console 230 est fixée au banc 600. La mise en géométrie de la machine est donc réalisée par un système particulièrement simple et facile d'utilisation.

Selon une autre caractéristique particulièrement avantageuse, ledit sous-ensemble 300 assurant le support de la pièce, se déplace le long de rails longitudinaux 610 et 620 et solidaires dudit banc 600 à une extrémité duquel est positionnée ladite console 230. Afin de mettre en mouvement ledit sous-ensemble 300, les moyens de guidage sont associés à des moyens de mise en mouvement constitués par des moteurs linéaires dont un bloc secondaire 630 et 640 jouxte chaque rail 610 et 620.

Selon le mode de réalisation illustré, ledit banc 600 est préformé longitudinalement sur sa partie centrale d'un évidement 650 de réception et d'évacuation des copeaux issus de l'opération d'usinage.

Afin de protéger le poste d'entraînement 200 de la projection desdits copeaux issus du poste d'usinage 100, la demanderesse a imaginé un tablier de séparation 400 particulièrement optimisé.

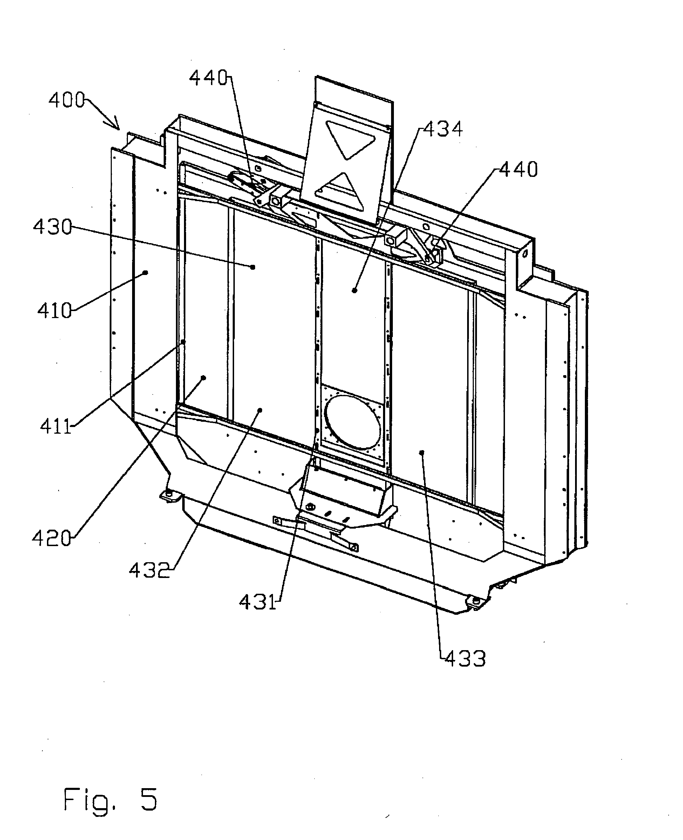

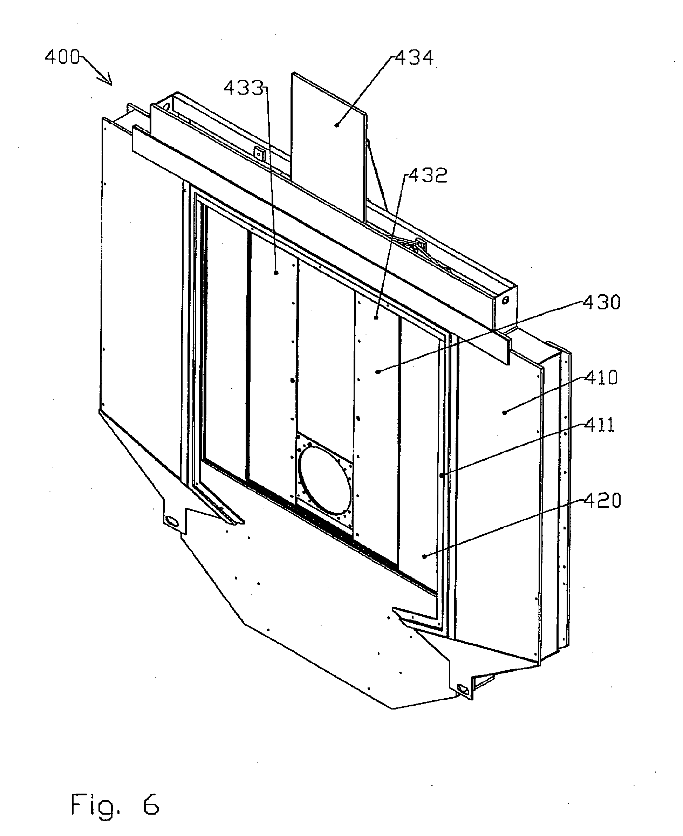

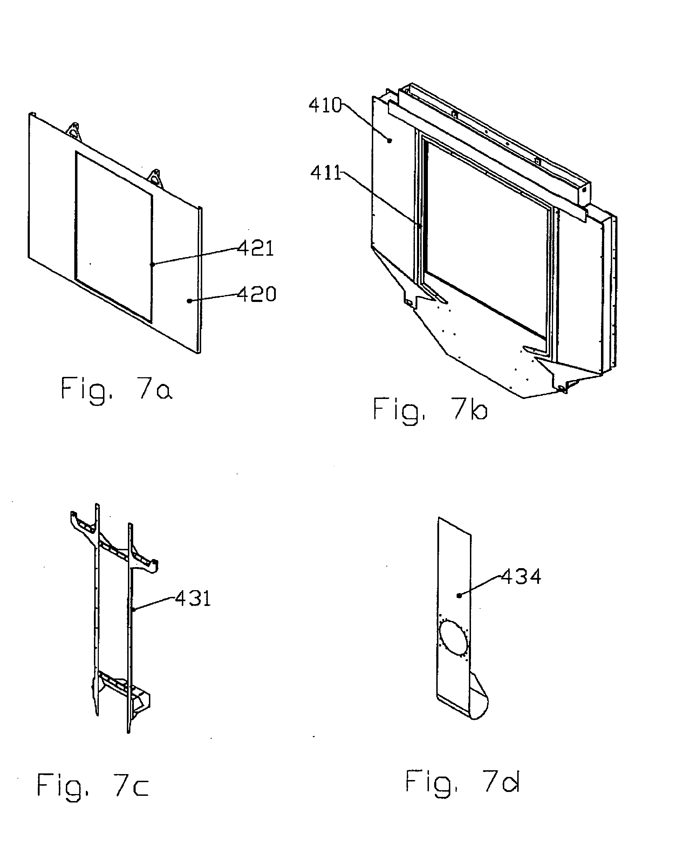

Selon l'invention et comme illustré par les figures 5, 6 et 7, ledit tablier de protection 400 assurant la séparation du poste d'usinage 100 par rapport au poste d'entraînement 200 est formé par l'association d'un rideau suivant les mouvements de l'organe mobile selon un premier axe Y et traversé par ce dernier d'une part, avec un empilement de panneaux venant par déplacement direct ou indirect selon un deuxième axe X fermer une fenêtre de déplacement de l'organe porte-outil d'autre part. Ce tablier de protection 400 est constitué par :
- un rideau mobile 434 traversé par le module porte-outil 110 et se déplaçant selon un premier axe Y à l'intérieur d'un encadrement 431 guidant le déplacement dudit rideau 434 et pourvu de part et d'autre du chemin de déplacement de plaques fixes 432, 433 par rapport audit encadrement 431, l'encadrement 431, le rideau 434 et les plaques 432, 433 formant un premier panneau mobile 430 selon un deuxième axe X perpendiculaire au premier Y,
- un deuxième panneau mobile 420 selon ledit deuxième axe X et qui, comprend ménagée sur sa partie centrale une première fenêtre 421, fermée par ledit premier panneau mobile,
- un cadre fixe 410 définissant une deuxième fenêtre 411 fermée par ledit deuxième panneau mobile 420 et par ledit premier panneau mobile 430 y associé,
- des pantographes 440 dont une première extrémité est solidaire du cadre fixe 410 et une deuxième extrémité est solidaire dudit encadrement 431, les points d'articulations intermédiaires étant liés audit deuxième panneau mobile 420.

L'association d'un système à panneaux reliés par pantographes pour l'axe X à un système à rideau glissant et relativement souple à l'intérieur d'un desdits panneaux pour l'axe Y , constitue une solution non seulement simple et économiquement intéressante mais évite de plus, la présence de zones "mortes" en bordures supérieures et inférieures de la zone balayée par le module porte-outil dont la surface maximale est définie par la fenêtre fixe.

## Revendications

1. Machine-outil (M) comprenant un poste d'usinage (100) et un poste d'entraînement (200) d'au moins un module porte-outil (110) assurant les opérations d'usinage à l'intérieur du poste d'usinage (200),
- ledit poste d'usinage (100) comprenant un sous-ensemble (300) supportant au moins une pièce à usiner,
- le poste d'entraînement (200) comprenant :
- une électrobroche constituant le module porte-outil (110),
- une poupée (210) qui, portant ladite électrobroche, se déplace perpendiculairement à l'axe de rotation (Z) de l'électrobroche selon un premier axe (Y) dans un premier plan vertical de déplacement,
- un portique (220) qui, se déplaçant selon un deuxième axe (X) perpendiculaire au premier (Y) dans un autre plan vertical de déplacement parallèle au premier, comporte une paire de rails guidant en translation la poupée (210) selon ledit premier axe (Y),
- une console (230) liée au bâti de la machine-outil (M) portant des rails transversaux (231 et 232) de guidage sur lesquels se déplace ledit portique (220) en translation horizontale,
- un tablier de protection (400) qui, suivant les mouvements du module porte-outil (110), sépare le poste d'usinage (100) du poste d'entraînement (200),
- la liaison entre le portique (220) et lesdits rails transversaux (231 et 232) portés par ladite console se situe au niveau de la partie basse dudit portique (220), la partie haute étant libre de tout élément de guidage ou d'entraînement de sorte que lorsque le mouvement de la poupée (210) positionne l'électrobroche en partie haute de portique (220), l'arrière de ladite électrobroche devient accessible pour des opérations d'installation, de manutention et d'entretien,
- les rails transversaux (231 et 232) de guidage de la translation du portique sont inscrits dans des plans verticaux et horizontaux différents,
- l'entraînement en translation selon un mouvement horizontal transversal est réalisé par un seul moteur linéaire (233) intercalé entre lesdits rails transversaux (231 et 232),
- ledit sous-ensemble (300) assurant le support de la pièce à usiner se déplace le long de rails longitudinaux (610 et 620) solidaires d'un banc (600) à une extrémité duquel est positionné ladite console (230),
**CARACTÉRISÉE PAR LE FAIT QUE**
- la console (230) assurant le support du portique (220) et de la poupée (210) porte électrobroche est équipée d'un point de pivotement (A) par rapport au reste du bâti définissant un axe de rotation sensiblement vertical, ladite console (230) comprenant également un moyen de mise en mouvement susceptible de positionner angulairement ladite console (230) et l'ensemble qu'elle supporte par rapport à son axe de rotation vertical (A) de façon à régler le positionnement angulaire de l'ensemble supporté par rapport au sous-ensemble porte-pièce (300), et
l'extrémité du banc (600) supportant ladite console (230) est préformée d'une surface plane horizontale coopérant avec une surface plane correspondante ménagée sur la console (230) de façon à autoriser un déplacement plan sur plan entre la console (230) et ledit banc (600) lors de sa rotation autour de son axe de pivotement (A) à des fins de réglage angulaire.

2. Machine-outil (M) selon la revendication 1, **CARACTÉRISÉE PAR LE FAIT QUE** ladite console (230) est préformée de trois surfaces planes parallèles qui accueillent pour celle située entre les deux autres, le bloc secondaire (233) dudit moteur linéaire et pour les deux autres chacune un rail transversal de guidage.

3. Machine-outil (M) selon la revendication 2, **CARACTÉRISÉE PAR LE FAIT QUE** lesdites surfaces planes sont verticales.

4. Machine-outil (M) selon la revendication 1, **CARACTÉRISÉE PAR LE FAIT QUE** ledit tablier de protection (400) assure la séparation entre le poste d'usinage (100) et le poste d'entraînement (200) en suivant les mouvements du module porte-outil (110) est constitué par :
- un rideau mobile (434) traversé par le module porte-outil (110) et se déplaçant selon un premier axe (Y) à l'intérieur d'un encadrement (431) guidant le déplacement dudit rideau (434) et pourvu de part et d'autre du chemin de déplacement de plaques fixes (432, 433) par rapport audit encadrement (431), l'encadrement (431), le rideau (434) et les plaques (432, 433) formant un premier panneau mobile (430) selon un deuxième axe (X) perpendiculaire au premier (Y),
- un deuxième panneau mobile (420) selon ledit deuxième axe (X) et qui, comprend ménagée sur sa partie centrale une première fenêtre (421), fermée par ledit premier panneau mobile,
- un cadre fixe (410) définissant une deuxième fenêtre (411) fermée par ledit deuxième panneau mobile (420) et par ledit premier panneau mobile (430) y associé,
- des pantographes (440) dont une première extrémité est solidaire du cadre fixe (410) et une deuxième extrémité est solidaire dudit encadrement (431), les points d'articulations intermédiaires étant liés audit deuxième panneau mobile (420).

## Claims

1. Machine tool (M) comprising a machining station (100) and a driving station (200) of at least one tool holder module (110) providing the machining operations inside the machining station (200),
- said machining station (100) comprising a subassembly (300) supporting at least one workpiece to be machined,
- the driving station (200) comprising:
- an electric turning spindle constituting the tool holder module (110),
- a headstock (210) which, carrying said electric turning spindle, is displaced perpendicularly to the axis of rotation (Z) of the electric turning spindle according to a first axis (Y) in a first vertical plane of displacement,
- a gantry (220) which, being displaced according to a second axis (X) perpendicular to the first (Y) in another vertical plane of displacement parallel to the first, comprises a pair of rails guiding the translational movement of the headstock (210) according to said first axis (Y),
- a console (230) linked to the frame of the machine tool (M) carrying crossrails (231 and 232) for guiding whereon is displaced said gantry (220) in horizontal translation,
- a protective shield (400) which, according to the movements of the tool holder module (110), separates the machining station (100) from the driving station (200),
- the connection between the gantry (220) and said crossrails (231 and 232) carried by said console is situated at the bottom part of said gantry (220), the top part being free of any guide or drive element in such a way that when the movement of the headstock (210) positions the electric turning spindle at the top part of the gantry (220), the rear of said electric turning spindle becomes accessible for installation, handling and maintenance operations,
- the crossrails (231 and 232) for guiding the translation of the gantry are inscribed within different vertical and horizontal planes,
- the translational drive motion according to a transversal horizontal movement is produced using a single linear motor (233) inserted between said crossrails (231 and 232),
- said subassembly (300) providing the support for the workpiece to be machined is displaced along longitudinal rails (610 and 620) attached to a bench (600) at the end of which is positioned said console (230),
**characterised by** the fact that
- the console (230) providing the support of the gantry (220) and of the headstock (210) carrying the electric turning spindle is provided with a pivoting point (A) in relation to the rest of the frame defining a substantially vertical axis of rotation, said console (230) further comprising a means for putting into movement that can angularly position said console (230) and the unit that it supports in relation to its vertical axis of rotation (A) in such a way as to adjust the angular positioning of the unit supported in relation to part holder subassembly (300), and
the end of the bench (600) supporting said console (230) is preformed with a horizontal planar surface cooperating with a corresponding planar surface arranged on the console (230) in such a way as to authorise a plane-to-plane displacement between the console (230) and said bench (600) during its rotation around its pivot axis (A) for the purposes of angular adjustment.

2. Machine tool (M) according to claim 1, **characterised by** the fact that said console (230) is preformed with three parallel planar surfaces which receive for the one situated between the two others, the secondary block (233) of said linear motor and for the two others each a guide crossrail.

3. Machine tool (M) according to claim 2, **characterised by** the fact that said planar surfaces are vertical.

4. Machine tool (M) according to claim 1, **characterised by** the fact that said protective shield (400) provides the separation between the machining station (100) and the driving station (200) by following the movements of the tool holder module (110) is constituted of:
- a mobile curtain (434) crossed by the tool holder module (110) and being displaced according to a first axis (Y) inside a surround (431) guiding the displacing of said curtain (434) and provided on either side of the path of displacement with fixed plates (432, 433) in relation to said surround (431), the surround (431), the curtain (434) and the plates (432, 433) forming a first panel that is mobile (430) according to a second axis (X) perpendicular to the first (Y),
- a second panel that is mobile (420) according to said second axis (X) and which includes, arranged on its central part, a first window (421), closed by said first mobile panel,
- a fixed frame (410) defining a second window (411) closed by said second mobile panel (420) and by said first mobile panel (430) associated therein,
- pantographs (440) of which a first end is attached to the fixed frame (410) and a second end is attached to said surround (431), the intermediate articulation points being linked to said second mobile panel (420).

## Patentansprüche

1. Werkzeugmaschine (M), umfassend eine Bearbeitungsstation (100) und eine Station (200) zum Antreiben mindestens eines Werkzeughaltermoduls (110), das die Bearbeitungsvorgänge im Innern der Bearbeitungsstation (200) sicherstellt,
- wobei die Bearbeitungsstation (100) ein Teilsystem (300) umfasst, das mindestens ein Werkstück abstützt,
- wobei die Antriebsstation (200) Folgendes umfasst:
- einen Elektrodorn, der das Werkzeughaltermodul (110) bildet,
- einen Spindelstock (210), der sich den Elektrodorn tragend rechtwinklig zur Drehachse (Z) des Elektrodorns an einer ersten Achse (Y) entlang in einer ersten senkrechten Verschiebungsebene bewegt,
- einen Träger (220), der sich entlang einer zweiten Achse (X), die zu der ersten (Y) rechtwinklig ist, in einer anderen senkrechten Verschiebungsebene parallel zur ersten bewegend ein Paar Schienen umfasst, die den Spindelstock (210) an der ersten Achse (Y) entlang translationsmäßig führen,
- eine Auflage (230), die mit dem Gestell der Werkzeugmaschine (M) verbunden ist, die querliegende Führungsschienen (231 und 232) trägt, auf denen sich der Träger (220) in waagerechter Translation bewegt,
- eine Schutzvorrichtung (400), die den Bewegungen des Werkzeughaltermoduls (110) folgend die Bearbeitungsstation (100) von der Antriebsstation (200) trennt,
- wobei die Verbindung zwischen dem Träger (220) und den Querschienen (231 und 232), die von der Auflage getragen werden, sich an dem unteren Teil des Trägers (220) befindet, wobei der obere Teil von jeglichen Führungs- oder Antriebselementen frei ist, so dass, wenn die Bewegung des Spindelstocks (210) den Elektrodorn am oberen Teil des Trägers (220) positioniert, der hintere Teil des Elektrodorns für Einbau-, Handhabungs- und Wartungsvorgänge zugänglich wird,
- wobei die Querschienen (231 und 232) zum Führen der Translation des Trägers in unterschiedlichen senkrechten und waagerechten Ebenen liegen,
- wobei der Translationsantrieb entlang einer querliegenden waagerechten Bewegung durch einen einzigen Linearmotor (233) ausgeführt wird, der zwischen den Querschienen (231 und 232) eingeschoben ist,
- wobei das Teilsystem (300), das die Abstützung des Werkstücks sicherstellt, sich an Längsschienen (610 und 620) entlang bewegt, die mit einer Bank (600) fest verbunden sind, an deren einem Ende die Auflage (230) positioniert ist,
**dadurch gekennzeichnet, dass**
- die Auflage (230), welche die Abstützung des Trägers (220) und des den Elektrodorn tragenden Spindelstocks (210) sicherstellt, mit einem Schwenkpunkt (A) im Verhältnis zu dem Rest des Gestells versehen ist, der eine im Wesentlichen senkrechte Drehachse definiert, wobei die Auflage (230) auch ein Mittel zur Ingangsetzung umfasst, das die Auflage (230) und die Anordnung, welche sie abstützt, im Verhältnis zu seiner senkrechten Drehachse (A) winkelmäßig positionieren kann, um die winkelmäßige Positionierung der abgestützten Anordnung im Verhältnis zu dem Werkstückhalter-Teilsystem (300) einzustellen, und
das Ende der Bank (600), das die Auflage (230) abstützt, aus einer waagerechten ebenen Oberfläche vorgeformt ist, die mit einer entsprechenden ebenen Oberfläche zusammenwirkt, die auf der Auflage (230) eingerichtet ist, um bei ihrer Drehung um ihre Schwenkachse (A) zum Zwecke der Winkeleinstellung eine Verschiebung Ebene auf Ebene zwischen der Auflage (230) und der Bank (600) zu erlauben.

2. Werkzeugmaschine (M) nach Anspruch 1, **dadurch gekennzeichnet, dass** die Auflage (230) aus drei parallelen ebenen Oberflächen vorgeformt ist, von denen diejenige, die sich zwischen den beiden anderen befindet, den Nebenblock (233) des Linearmotors aufnimmt, und von denen die beiden anderen jeweils eine querliegende Schiene aufnehmen.

3. Werkzeugmaschine (M) nach Anspruch 2, **dadurch gekennzeichnet, dass** die ebenen Oberflächen senkrecht sind.

4. Werkzeugmaschine (M) nach Anspruch 1, **dadurch gekennzeichnet, dass** die Schutzvorrichtung (400), welche die Trennung zwischen der Bearbeitungsstation (100) und der Antriebsstation (200) sicherstellt, indem es den Bewegungen des Werkzeughaltermoduls (110) folgt, besteht aus:
- einem beweglichen Vorhang (434), den das Werkzeughaltermodul (110) durchquert und der sich entlang einer ersten Achse (Y) innerhalb einer Einfassung (431) bewegt, welche die Verschiebung des Vorhangs (434) führt, und auf beiden Seiten des Verschiebungsweges mit Platten (432, 433) versehen ist, die im Verhältnis zur Einfassung (431) feststehend ist, wobei die Einfassung (431), der Vorhang (434) und die Platten (432, 433) ein erstes Feld (430) bilden, das entlang einer zweiten Achse (X), die zu der ersten Achse (Y) rechtwinklig ist, beweglich ist,
- ein zweites Feld (420), das entlang der zweiten Achse (X) beweglich ist und das ein erstes Fenster (421) umfasst, das auf seinem mittleren Teil eingerichtet ist und durch das erste bewegliche Feld geschlossen wird,
- einen feststehenden Rahmen (410), der ein zweites Fenster (411) definiert, das von dem zweiten beweglichen Feld (420) und von dem damit verbundenen ersten beweglichen Feld (430) geschlossen wird,
- Stromabnehmern (440), deren erstes Ende mit dem feststehenden Rahmen (410) fest verbunden ist und deren zweites Ende mit der Einfassung (431) fest verbunden ist, wobei die Zwischengelenkpunkte mit dem zweiten beweglichen Feld (420) verbunden sind.
